# EUROPEAN PATENT SPECIFICATION

(11) **EP 2 589 529 B1**
(45) Date of publication and mention of the grant of the patent: **28.09.2016**
(21) Application number: 10853970.1
(22) Date of filing: 08.11.2010
(51) Int. Cl.: B62K 15/00

(54) **BICYCLE FOLDER WITH SELF-LOCKING DEVICE**
KLAPPFAHRRAD MIT SELBSTVERSCHLUSSVORRICHTUNG
ARTICULATION DE BICYCLETTE DOTÉE D'UN DISPOSITIF D'AUTO-VERROUILLAGE

(30) Priority: 01.07.2010 CN 201020250103 U
(43) Date of publication of application: 08.05.2013
(73) Proprietor: Shenzhen Xidesheng Bicycle Co. Ltd., Shenzhen, Guangdong 518000 (CN)
(72) Inventor: TAN, Weilong, Shenzhen, Guangdong 518000 (CN); TANG, Mingxi, Shenzhen, Guangdong 518000 (CN); CHEN, Yichuan, Shenzhen, Guangdong 518000 (CN)
(74) Representative: Sun, Yiming
(86) International application number: PCT/CN2010/078496
(87) International publication number: WO 2012/000267

(56) References cited:
- CN-A- 101 549 735
- CN-C- 100 569 580
- CN-U- 201 447 018
- CN-Y- 201 329 934
- DE-U1-202008 010 407
- JP-A- 2003 137 162
- US-A- 5 875 662

## Description

### FIELD OF THE INVENTION

The present invention relates to a folded bicycle accessory and, more particularly, to a bicycle folder with a self-locking device which can lock the handle of the folder.

### BACKGROUND OF THE INVENTION

DE 20 2008 010 407 U1 describes a clamping device having a security hook interacting with a hand gear.

JP 2003 137162 A describes a connecting device of a folding bicycle in accordance with the preamble of claim 1.

In the market, a conventional bicycle folder generally is a handle locking mechanism which has a complex structure and so-called quick operation. This type of folder merely makes the front and rear folding leaves of the folder lock together by a four-link adjustment mechanism or other adjustment means. Such structure is relatively complex and easy to produce misalignment after deforming and so on.

### SUMMARY OF THE INVENTION

To solve above-mentioned drawbacks, the present invention provides a bicycle folder with a self-locking device, which can lock the handle of the folder in accordance with the features of claim 1.

The present invention can be achieved by the following technical means:

The bicycle folder with a self-locking of the present invention, is composed of front and rear folding leaves of the folder and a quick release handle, the quick release handle is mounted on the front folding leaf of the folder, and tightly locked on the front and rear folding leaves of the folded folder after they are folded; a locking buckle is provided on said quick release handle, and a locking tongue is provided on a bicycle tube; in a locked position the locking tongue is locked in the locking buckle of the quick release handle which can tightly lock the folder; said locking tongue is composed of a position limit handle and a handle shaft, and has a certain clearance from the bicycle tube; the position limit handle is curved ruler-shaped and can revolve 0∼60° in horizontal direction around the handle shaft which is mounted on the position limit handle; a first end of said position limit handle which contacts with the locking buckle is an inclined surface, when locking tightly, the locking buckle can press down the position limit handle by the inclined surface and then enter into the clearance between the position limit handle and bicycle tube; a second end of the position limit handle is a weight block which can make the first end of the position limit handle contacting with the locking buckle always maintain an upwards state by the gravity force.

The locking tongue further includes a torsion spring which is mounted in the position limit handle, wherein the position limit handle and the torsion spring are fixed onto the bicycle tube by the handle shaft, and wherein a spring force of the torsion spring also keeps the first end of the position limit handle which contacts with the locking buckle always in an upwards state.

The locking buckle is composed of a pin which has a taper end and a piece of metal tongue which is fixed onto the quick release handle by the pin, wherein a clearance height between the metal tongue and the quick release handle is a little bigger than a thickness of the position limit handle.

The handle shaft is close to the locking buckle, when the bicycle folder is closed, and an arm of force of the second end of the locking tongue, where the weight block is provided, is relatively long. Thus, based on lever principle, if there is a want to open the folder, it is merely needed to rise the second end of the position limit handle where the weight block is provided, thereby opening the folder easily.

The position of the locking buckle and that of the locking tongue can be exchanged according to actual need.

The bicycle folder with a self-locking device of the present invention can reduce structure precision requirements of a four-link adjustment mechanism or other adjustment means in the quick release handle, avoid the unexpected trigger of the handle, and prevent the accidents of a releasing of the handle and of a loosening of the folder. By the cooperation between the inclined surface and the weight block of the position limit handle, a self-locking function is easy to realize. A locking force is then increased under the torsion action of a torsion spring, thus enabling the self-locking structure to be safer.

### BRIEF DESCRIPTION OF THE DRAWINGS

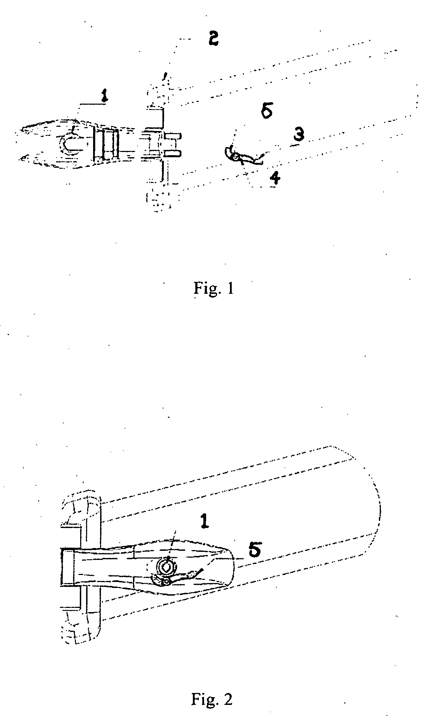

FIG. 1 is a state diagram showing that the quick release handle of the present invention is in an open state;
FIG. 2 is a state diagram showing that the quick release handle of the present invention is going to be locked;

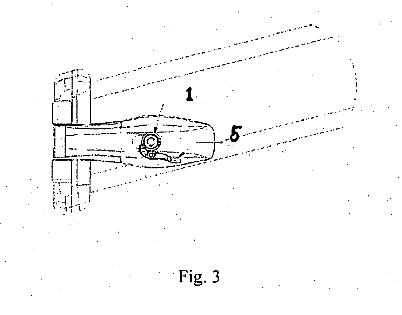

FIG. 3 is a state diagram showing that the quick release handle of the present invention has been locked.

### DETAILED DESCRIPTION OF ILLUSTRATED EMBODIMENTS

According to the figures, the bicycle folder 2 with a self-locking of the present invention consists of a pair of front and rear folding leaves of the folder 2 and a quick release handle thereof. The quick release handle is mounted on a front folding leave of the folder 2 and locked at the front and rear folding leaves of the folded folder. The quick release handle has a locking buckle 1 mounted thereon. A locking tongue 5 is provided on a bicycle tube and locked at the locking buckle 1 of the quick release handle of the folder 2. The locking tongue 5 is composed of a position limit handle 3, a handle shaft and a torsion spring 4. The position limit handle 3 is curved ruler-shaped and can revolve 0∼60° in horizontal direction around the handle shaft which is mounted on the position limit handle 3. The torsion spring 4 is mounted in the position limit handle 3, and the position limit handle 3 and torsion spring 4 are fixed onto the bicycle tube by the handle shaft. The locking buckle 1 is composed of a pin which has a taper end and a piece of metal tongue which is fixed onto the quick release handle by the pin. The clearance height between the metal tongue and the quick release handle is a little bigger than the thickness of the position limit handle 3.

When the bicycle folder 2 with a self-locking of the present invention is in an opening state, it is not different from the conventional bicycle folder; during the quick release handle locking the front and rear folding leaves of the folder, the taper end of the locking buckle 1 of the quick release handle props up the position limit handle 3 until the curved ruler end slides into the clearance between the metal tongue of the locking buckle 1 and the quick release handle; when the quick release handle has locked the front and rear folding leaves of the folder, the position limit handle 3 locks the quick release handle simply and easily by the action of the torsion spring 4.

When the bicycle folder 2 with a self-locking of the present invention is in an locking state, it is merely needed to operate the position limit handle 3 which is fixed on the bicycle tube and make the locking tongue 5 withdraw from the locking buckle 2, thereby pulling the quick release handle and then open the folder.

The first end of the position limit handle 3 which contacts with the locking buckle 1 is an inclined surface, which makes the locking buckle 1 slide into the clearance between the position limit handle 3 and bicycle tube more easily. The handle shaft is provided on the first end which is close to the locking buckle 1, the arm of force of the second end of the position limit handle is relatively long and the second end is a weight block to ensure that the contact end of the position limit handle 3 maintains an upwards state, thereby increasing the stability of the locking action of the folder.

The bicycle folder with a self-locking of the present invention can lock the quick release handle which is used to lock the front and rear folding leaves of the folder merely by the action of interference fit, thereby locking reliably and adjusting expediently.

While the invention has been described in connection with what are presently considered to be the most practical and preferred embodiments, it is to be understood that the invention is not to be limited to the disclosed embodiments, but on the contrary, is intended to cover various modifications and equivalent arrangements included within the scope of the invention.

## Claims

1. A bicycle folder (2) having a self-locking device, said bicycle folder (2) comprising:
- a pair of front and rear folding leaves;
- a quick release handle mounted on the front folding leaf; and
- a locking tongue (5) having a position limit handle (3), wherein when being in a locked position, the locking tongue (5) is locked in a locking buckle (1) for tightly locking the bicycle folder (2);
**characterized in that**
the locking tongue (5) has a handle shaft fixing the position limit handle (3) to a bicycle tube, wherein the position limit handle (3) is curved ruler-shaped and able to revolve 0° to 60° around the handle shaft arranged horizontally, wherein a first end of said position limit handle (3) is an inclined surface and a second end of the position limit handle (3) is a weight block;
wherein the quick release handle has a locking buckle (1) for locking the bicycle folder (2) by pressing down the position limit handle (3) at its inclined surface and by entering into a clearance between the position limit handle (3) and the bicycle tube; wherein gravity force keeps the weight block maintaining the first end of the position limit handle (3), which contacts the locking buckle (1), always in an upwards state.

2. The bicycle folder (2) according to claim 1, wherein the locking tongue (5) further comprises a torsion spring (4) which is mounted in the position limit handle (3), wherein the position limit handle (3) and the torsion spring (4) are fixed onto the bicycle tube by the handle shaft, and wherein a spring force of the torsion spring (4) also keeps the first end of the position limit handle (3), which contacts the locking buckle (1), always in an upwards state.

3. The bicycle folder (2) according to claim 1, wherein the locking buckle (1) is composed of a pin which has a taper end and a piece of metal tongue which is fixed onto the quick release handle by the pin, wherein a clearance height between the metal tongue and the quick release handle is a little bigger than a thickness of the position limit handle (3).

4. The bicycle folder (2) according to claim 2, wherein the handle shaft is close to the locking buckle (1), when the bicycle folder (2) is closed, and wherein an arm of force of the second end of the locking tongue (5), where the weight block is provided, is relatively long.

## Patentansprüche

1. Fahrrad-Klappeinrichtung (2) mit einer Selbstverschlussvorrichtung, wobei die Fahrrad-Klappeinrichtung (2) Folgendes umfasst:
- ein Paar vorderer und hinterer Klappblätter;
- ein Schnelltrenngriff, der am vorderen Klappblatt montiert ist; und
- eine Verriegelungszunge (5) aufweisend einen Positionsbegrenzungsgriff (3), wobei wenn sie in einer verriegelter Position ist, die Verriegelungszunge (5) in einer Verriegelungsschnalle (1) verriegelt ist, um die Fahrrad-Klappeinrichtung (2) fest zu verriegeln;
**dadurch gekennzeichnet, dass**
die Verriegelungszunge (5) einen Griffschaft aufweist, der den Positionsbegrenzungsgriff (3) an ein Fahrradrohr befestigt, wobei der Positionsbegrenzungsgriff (3) linearförmig gekrümmt und in der Lage ist, sich um 0° bis 60° um den Griffschaft horizontal angeordnet ist, wobei ein erstes Ende des Positionsbegrenzungsgriffs (3) eine Schrägfläche ist und ein zweites Ende des Positionsbegrenzungsgriffs (3) ein Gewichtsblock ist;
wobei der Schnelltrenngriff eine Verriegelungsschnalle (1) zur Verriegelung der Fahrrad-Klappeinrichtung (2) durch Herunterdrücken des Positionsbegrenzungsgriffs (3) an dessen Schrägfläche und durch Eintritt in eine lichte Höhe zwischen dem Positionsbegrenzungsgriff (3) und dem Fahrradrohr aufweist; wobei der Gewichtsblock durch die Schwerkraft weiterhin das erste Ende des Positionsbegrenzungsgriffs (3), welches in Kontakt mit der Verriegelungsschnalle (1), immer in einem nach oben gerichteten Zustand beibehält.

2. Fahrrad-Klappeinrichtung (2) nach Anspruch 1, wobei die Verriegelungszunge (5) ferner eine Drehfeder (4), welche im Positionsbegrenzungsgriff (3) montiert ist, umfasst, wobei der Positionsbegrenzungsgriff (3) und die Drehfeder (4) auf dem Fahrradrohr durch den Griffschaft befestigt sind, und wobei eine Federkraft der Drehfeder (4) des ersten Endes des Positionsbegrenzungsgriffs (3), welches in Kontakt mit der Verriegelungsschnalle (1) ist, auch immer in einem nach oben gerichteten Zustand hält.

3. Fahrrad-Klappeinrichtung (2) nach Anspruch 1, wobei die Verriegelungsschnalle (1) aus einem Stift, welcher ein sich verjüngendes Ende aufweist und einer Metallzunge, welche auf dem Schnelltrenngriff durch den Stift befestigt ist, besteht, wobei eine lichte Höhe zwischen der Metallzunge und dem Schnelltrenngriff ein wenig größer ist als eine Dicke des Positionsbegrenzungsgriffs (3).

4. Fahrrad-Klappeinrichtung (2) nach Anspruch 2, wobei der Griffschaft nahe der Verriegelungsschnalle (1) ist, wenn die Fahrrad-Klappeinrichtung (2) geschlossen ist, und wobei ein Kraftarm des zweiten Endes der Verriegelungszunge (5), wo sich der Gewichtsblock befindet, relativ lang ist.

## Revendications

1. Articulation de bicyclette (2) comportant un dispositif d'auto-verrouillage, ladite articulation de bicyclette (2) comprenant :
- une paire de battants de pliage avant et arrière ;
- une poignée à dégagement rapide montée sur le battant de pliage avant ; et
- une languette de verrouillage (5) comportant une poignée limite de position (3), dans laquelle, étant à une position verrouillée, la languette de verrouillage (5) est verrouillée dans une boucle de verrouillage (1) pour le verrouillage étroit de l'articulation de bicyclette (2) ;
**caractérisée en ce que**
la languette de verrouillage (5) présente une tige de poignée fixant la poignée de limite de position (3) à un tube à bicyclette, dans lequel la poignée de limite de position (3) est courbée en forme de règle et est capable de tourner de 0° à 60° autour de la tige de poignée disposée horizontalement, dans lequel une première extrémité de poignée de ladite poignée de limite de position (3) est une surface inclinée et une deuxième extrémité de la poignée de limite de position (3) est un bloc de poids ;
dans laquelle la poignée à dégagement rapide comporte une boucle de verrouillage (1) pour le verrouillage de l'articulation de bicyclette (2) en appuyant vers le bas la poignée de limite de position (3) sur sa surface inclinée et en entrant dans un dégagement entre la poignée de limite de position (3) et le tube de bicyclette ; dans laquelle la force gravitationnelle amène le bloc de poids à maintenir la première extrémité de la poignée de limite de position (3) en contact avec la boucle de verrouillage (1), toujours dans un état orienté vers le haut.

2. Articulation de bicyclette (2) selon la revendication 1, dans laquelle la languette de verrouillage (5) comprend en outre un ressort de torsion (4) monté dans la poignée de limite de position (3), dans laquelle la poignée de limite de position (3) et le ressort de torsion (4) sont fixés sur le tube de bicyclette par la tige de poignée, et dans laquelle une résilience du ressort de torsion (4) tient également la première extrémité de la poignée de limite de position (3) en contact avec la boucle de verrouillage (1) toujours dans un état orienté vers le haut.

3. Articulation de bicyclette (2) selon la revendication 1, dans laquelle la boucle de verrouillage (1) est composée d'un goupille présentant une extrémité effilée et une pièce de languette métallique qui est fixée sur la poignée à dégagement rapide par la goupille, dans laquelle une hauteur libre entre la languette métallique et la poignée à dégagement rapide est un peu plus grande qu'une épaisseur de la poignée de limite de position (3).

4. Articulation de bicyclette (2) selon la revendication 2, dans laquelle la tige de poignée est proche de la boucle de verrouillage (1), lorsque l'articulation de bicyclette (2) est fermée, et dans laquelle un bras de force de la deuxième extrémité de la languette de verrouillage (5) où se trouve le bloc de poids est relativement long.
